# EUROPÄISCHE PATENTSCHRIFT

(11) **EP 1 638 300 B1**
(45) Veröffentlichungstag und Bekanntmachung des Hinweises auf die Patenterteilung: **10.04.2013**
(21) Anmeldenummer: 05020410.6
(22) Anmeldetag: 19.09.2005
(51) Int. Cl.: H04M 1/253, H04M 7/00, H04L 29/06

(54) **Drahtloses Netzwerk und IP Telefonie-Endgerät sowie Verfahren zum Betreiben eines solchen Telefonie-Endgerätes im Netzwerk**
Wireless network and IP telephone terminal as well as method of operating of such a telephone terminal in a network
Réseau et téléphone IP sans fil et procédé pour opérer un tel téléphone dans ce réseau

(30) Priorität: 18.09.2004 DE 102004045449
(43) Veröffentlichungstag der Anmeldung: 22.03.2006
(73) Patentinhaber: Tenovis GmbH & Co. KG, 60326 Frankfurt (DE)
(72) Erfinder: Wacker, Jörg, Dr., 64287 Darmstadt (DE)
(74) Vertreter: Tergau & Walkenhorst

(56) Entgegenhaltungen:
- EP-A- 1 445 928
- US-A1- 2003 193 946

## Beschreibung

Die Erfindung betrifft ein Verfahren zum Betreiben eines Telefonie-Endgerätes in einem Netzwerk, wobei das Telefonie-Endgerät eine Netzwerkschnittstelle aufweist, die bidirektional Sprachsignale digitalisiert und auf der Grundlage des Internet-Protokolls verpackt, sowie ein zugehöriges Telefonie-Endgerät bzw. ein Netzwerk, in dem ein solches Telefonie-Endgerät betrieben werden kann.

Nach ersten Ansätzen in den neunziger Jahren steht die Internet-Telefonie im Begriff, immer größere Marktanteile im Bereich der Telekommunikation zu erobern. Während frühere Internet-Telefonieangeboten hinsichtlich der Sprachqualität nur ein niedriges Niveau hatten, kann heutzutage dank Breitband-Internetzugängen und gut ausgebauten Netzwerken bei der Internet-Telefonie für eine auszureichende Sprachqualität gesorgt werden. Mit der Internet-Telefonie lässt sich gegenüber der herkömmlichen Telefonvermittlungstechnik aufgrund der Konvergenz der Netze für Sprach- und Datenübertragung wesentlich preiswerter telefonieren.

Bei der Internet-Telefonie werden die Sprachsignale komprimiert und digitalisiert und in Form von Sprachpaketen unter Nutzung eines Internet-Protokolls über ein KommunikationsNetzwerk zum Gesprächspartner übertragen. Als Internet-Protokoll zur Sprachübertragung dient dabei in der Regel der H.323-Standard. Telefonie-Endgeräte können bei der Internet-Telefonie dabei sowohl Computern mit einer Netzwerkkarte, die über einen Lautsprecher und ein Mikrofon verfügen, als auch reguläre Telefone sein, die mit einer entsprechenden internetprotokollfähigen Netzwerkkarte ausgerüstet sind. Die Netzwerkkarte der Internet-Telefone ist dabei, ähnlich wie bei den Computern, über ein Netzwerkkabel an eine fest installierte Netzwerkdose angeschlossen.

Bei der Internet-Telefanie setzt die Netzwerkkarte im Internet-Telefon bzw. im internettelefoniefähigen Computer gemäß dem H.323-Standard-Signalisierungsprotokoll die Sprachsignale in komprimierte digitale Signale um und verpackt die komprimierten digitalen Sprachdaten zu Sprachpaketen für die Übertragung im Netzwerk. Ein an das Netzwerk angeschlossener Internet-Kommunikationsserver steuert dabei die Verbindungsprozesse. Der IP-Kommunikationsserver ist in der Regel ein Gateway, das die Internetadressen in Telefonnummern übersetzt und umgekehrt, die Zugangssteuerung unter Berücksichtigung der Netzauslastung übernimmt und die Netzwerkbandbreite verwaltet.

Nachteilhaft an den bekannten Internet-Telefonie-Endgeräten, wie sie insbesondere im Businessbereich eingesetzt werden, ist die mangelnde Flexibilität. Bei einer Umgestaltung von Arbeitsplätzen in einem Unternehmen ist es in der Regel zur Nutzung der Internet-Telefonie erforderlich, die Internet-Telefonie-Endgeräte neu mit dem Firmennetzwerk zu verkabeln. Weiterhin weisen die herkömmlichen Internet-Telefonie-Endgeräte auch nur einen begrenzten Leistungsumfang und Bedienkomfort auf, da der H.323-Standard nur wenige Leistungsmerkmale zulässt. Die Verbindung von Telefonie-Endgeräten über ein Funknetzwerk ist aus US 2003/0193946 A1, EP 1 445 928 A2 und WO 99/04534 bekannt.

Zielsetzung der Erfindung ist es, ein Verfahren zum Betreiben eines Telefonie-Endgerätes in einem Netzwerk, ein entsprechendes Netzwerk und ein zugehöriges Telefonie-Endgerät bereitzustellen, die sich durch eine hohe Flexibilität und einen großen Bedienkomfort auszeichnen.

Diese Aufgabe wird erfindungsgemäß mit einem Verfahren gemäß Anspruch 1, einen Netzwerk gemäß Anspruch 3 und einem Telefonie-Endgerät gemäß Anspruch 5 gelöst. Bevorzugte Weiterbildungen sind in den abhängigen Ansprüchen angegeben.

Erfindungsgemäß ist zum Ausführen einer Internet-Telefonie das Netzwerk mit einem Funk-Access-Punkt versehen, die Netzwerkschnittstelle im Telefonie-Endgerät als Funkschnittstelle ausgebildet und das Telefonie-Endgerät ein Systemtelefon mit Sonderfunktionen, die auf der Grundlage eines Telefonanlagen-protokolls ausgeführt werden, wobei die Funkschnittstelle des Telefonie-Endgerätes die Sonderfunktionen mit den Sprachdaten getunnelt überträgt.

Mit der erfindungsgemäßen Auslegung der Internet-Telefonie, bei der die Internet-Telefone als Systemtelefone einen großen Leistungsumfang und Bedienkomfort besitzt und aufgrund ihrer Anbindung an das Netzwerk über eine Funkstrecke portabel ausgelegt sind, besteht die Möglichkeit die Internet-Telefonie hoch flexibel, insbesondere auch im Businessbereich einsetzen zu können. Mit den erfindungsgemäßen portablen Internet-Systemtelefonen können z. B. in schnell wachsenden Unternehmen ohne zusätzlichen Verkabelungsaufwand einfach und kostengünstig neue Arbeitsplätze eingerichtet werden. Die erfindungsgemäßen Internet-Systemtelefone bieten darüber hinaus einen großen Leistungs-und Bedienumfang, was ein qualitativ hochwertiges Telefonieren auch über das Internet ermöglicht. Die Leistungsmerkmale des Systemtelefons, die auf der Grundlage eines Telefonanlagenprotokolls ausgeführt werden, werden dabei mit den Sprachdaten zusammen getunnelt zum Gesprächspartner übertragen.

Bevorzugt ist es, als Funkstandard zur Übertragung der Sprachdaten mit den getunnelten Sonderfunktionen den WLAN-Standard 802.11 einzusetzen. Hierdurch ist es möglich, auf bestehende WLAN-Infrastruktur bei der Internet-Telefonie zurückzugreifen und darüber hinaus bereits vorhandene WLAN-Daten-Endgeräte und WLAN-Mobiltelefone im Rahmen der Internet-Telefonie zu nutzen.

Gemäß einer weiteren bevorzugten Ausführungsform ist die Funkschnittstelle im Telefonie-Endgerät steckbar ausgelegt. Hierdurch besteht die Möglichkeit, bestehende Systemtelefone z. B. ISDN-Systemtelefone im Rahmen der Internet-Telefonie durch einfaches Nachrüsten zu nutzen.

Bevorzugt ist dabei weiterhin, dass die Sonderfunktionen des Internet-Systemstelefons ISDN-Leistungsmerkmale sind. Hierdurch wird für den Nutzer der Internet-Telefone ein maximaler Bedienkomfort erreicht, da der Benutzer dann alle die ihm in der Regel aus der regulären verbindungsorientierten Telefonie bekannten Funktionen auch bei der Internet-Telefonie vorfindet.

Die Erfindung wird anhand der beigefügten Zeichnungen näher erläutert. Es zeigen:
Figur 1 ein erfindungsgemäßes Netzwerk zur Internet-Telefonie; und
Figur 2 ein Blockschaltbild einer Funkschnittstelle eines erfindungsgemäßen Internet-Systemtelefons.

Neben der Telefonie über leistungsvermittelnde Netze, bei der zwischen den Gesprächspartnern für die Dauer der Verbindung eine quasi feste Leitung zur Verfügung gestellt wird, setzten sich bei der Telefonie zunehmend auch paketorientierte Vermittlungssysteme aufgrund des sich ergebenen Kostenvorteils durch. Insbesondere die Internet-Telefonie gewinnt dank Breitband-Internetzugängen und gut ausgebauter Netzwerke der Internet-Provider zunehmend an Bedeutung.

Bei der Internet-Telefonie werden die über ein Mikrofon aufgenommenen Sprachsignale mithilfe eines Analog-Digital-Umsetzers in einen digitalen Datenstrom verwandelt. Die Daten werden dabei in der Regel komprimiert und anschließend in Sprach-Datenpakete verpackt. Diese werden dann unter Nutzung eines Internet-Signalisierungsprotokolls, im Allgemeinen dem H.323-Protokoll, das die Echtzeitdatenübertragung von Audio- und Videodaten über Netzwerke ermöglicht, über ein Netzwerk zum gewünschten Gesprächspartner übertragen. Beim Gesprächspartner werden die ankommenden Datenpakete dann wieder zu einem digitalen Datenstrom zusammengefasst, dekomprimiert und mithilfe eines Digital-Analog-Umsetzers in ein analoges Sprachsignal zurückverwandelt.

Als Telefonie-Endgeräte zur Internet-Telefonie können Computer mit einer Netzwerkkarte und Headset bzw. Lautsprecher und Mikrofon eingesetzt werden. Weiterhin können jedoch auch analoge Telefone, die mit einer entsprechenden Netzwerkkarte zur Umsetzung der Sprachsignale in digitale Datenpakete ausgerüstet sind, verwendet werden. Solche internettelefoniefähigen Endgeräte werden herkömmlicher Weise über Netzwerkkabel an eine fest installierte Netzwerkdose angeschlossen. Zur Internet-Telefonie eingesetzte Computer und herkömmliche Internet-Telefone besitzen aufgrund ihrer festen Verbindung mit dem Netzwerk nur eine eingeschränkte Flexibilität, was insbesondere im Bereich der Businesskommunikation störend sein kann. Darüber hinaus besitzen herkömmliche Internet-Telefone nur einen eingeschränkten Leistungsumfang und Bedienkomfort, da das Standardsignalisierungsprotokoll H.323 nur wenige Basistelefonie-Leistungsmerkmale bietet. Neue Leistungsmerkmale müssen dann unter erheblichen Softwareaufwand realisiert werden.

Die vorliegende Erfindung sorgt für eine erhöhte Flexibilität in der Internet-Telefonie, insbesondere auch beim Einsatz in der Businesskommunikation, und für einen verbesserten Leistungsumfang und Bedienkomfort. Gemäß der Erfindung weist das Internet-Telefonie-Netzwerk einen Funk-Access-Punkt auf, wohingegen ein zugehöriges Telefonie-Endgerät eine Funkschnittstelle als Netzwerkkarte besitzt. Dieses Telefonie-Endgerät ist weiterhin als Systemtelefon mit Sonderfunktionen ausgelegt, die auf der Grundlage eines Telefonanlagen-Protokolls, z. B. des ISDN-Protokolls ausgeführt werden. Die Funkschnittstelle des Telefonie-Endgerätes sorgt dafür, dass diese Sonderfunktionen mit den Sprach-Datenpaketen getunnelt zum Gesprächspartner übertragen werden. Mit dieser Auslegung ist es möglich, mit der durch die Funkverbindung erreichten Portabilität der Internet-Telefonie-Endgeräte flexibel neue Arbeitsplätze ohne zusätzlichen Verkablungsaufwand einzurichten. Weiterhin können mithilfe der portablen Internet-Telefonie-Endgeräte dynamische Arbeitsgruppen in Besprechungen auf Konferenzen oder Messen schnell und problemlos gebildet werden. Durch das Tunneln der auf der Grundlagen von Telefon-Anlagenprotokollen, insbesondere dem ISDN-Protokoll, verwalteten Sonderfunktionen kann auch in der Internet-Telefonie der aus der leitungsorientierten Telefonie nach dem ISDN-Standard-Prinzip bekannte Leistungsumfang für Telefondienste gewährleistet werden. Dieser Leistungsumfang und Bedienkomfort kann durch die portable Auslegung der Internet-Telefone dann auch in Unternehmensbereichen genutzt werden, die bisher nur eingeschränkt an das Internet angebunden sind.

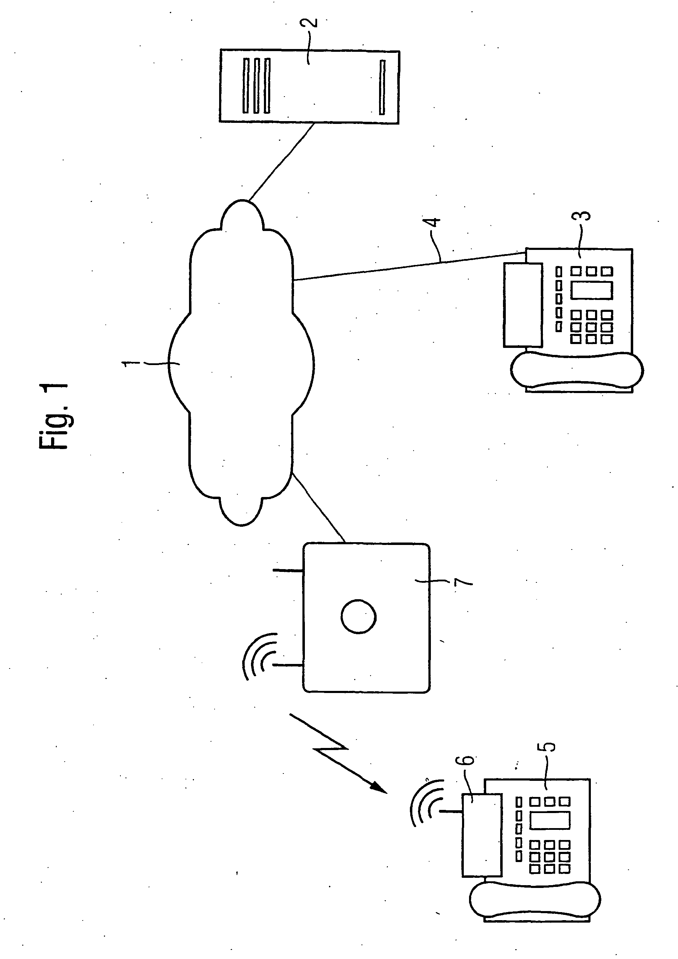

Figur 1 zeigt ein erfindungsgemäßes Internet-TelefonieNetzwerk 1. Das Netzwerk 1 kann ein beliebiges paketorientiertes Vermittlungssystem sein, das nach dem Internetprotokoll arbeitet. An das Netzwerk 1, dass als Weitbereichsnetzwerk (WAN) oder lokales Kommunikationsnetzwerk (LAN) ausgelegt ist, ist wenigstens ein Internet-Kommunikationsserver 2 angeschlossen, der die Verbindungsprozesse zwischen den Internet-Telefonie-Teilnehmern steuert. Aufgabe des IP-Kommunikationsservers 2 ist die Übersetzung der Internetadressen in Telefonnummern und umgekehrt, die Zugangssteuerung unter Berücksichtigung der Netzwerkauslastung um die Verwaltung der Netzwerkbandbreite. Als Endgeräte sind an das gezeigte Netzwerk zwei Telefone angeschlossen, wobei das eine Telefon ein herkömmliches internetfähiges Telefon 3 ist, das eine Netzwerkkarte besitzt, die über ein Netzwerkkabel 4 fest mit dem Netzwerk verbunden ist.

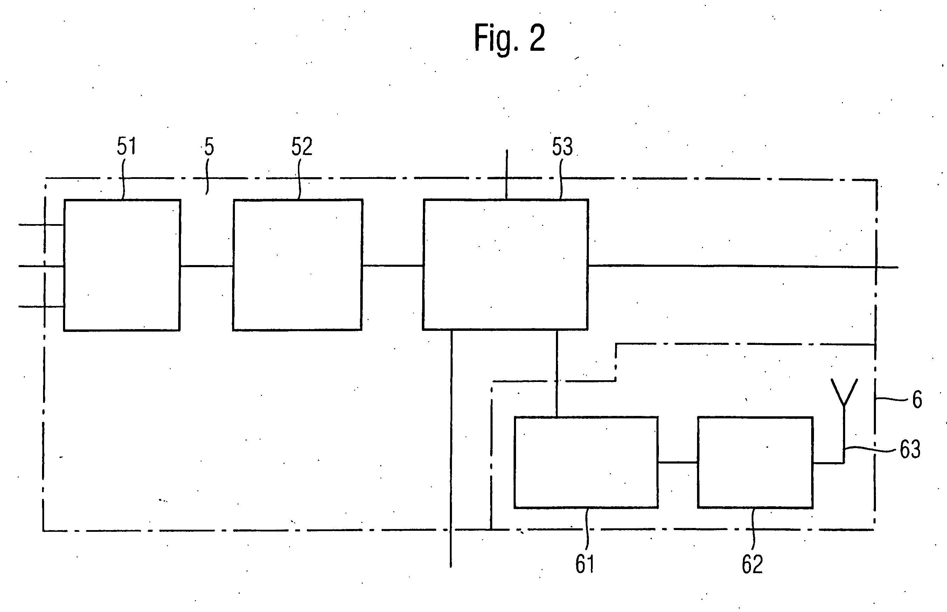

Das zweite angeschlossene Telefon ist ein gemäß der Erfindung weitergebildetes Internet-Systemtelefon 5, das als Netzwerkkarte eine Funkschnittstelle 6 aufweist, wie sie in Figur 2 näher dargestellt ist. Diese Funkschnittstelle 6 überträgt Daten zwischen dem Internet-Systemtelefon und einem Zugangspunkt 7, einem sog. Wireless-Access-Punkt, der an das Netzwerk angeschlossen ist. Die Datenübertragung erfolgt dabei vorzugsweise nach dem sog. IEEE 802.11-Funkstandard, bei dem zur Datenübertragung Radiowellen in der Regel im 2,4 GHz Bandbereich verwendet werden. Es besteht jedoch die Möglichkeit, zum Übertragen der Funkdaten zwischen der Netzwerkkarte das Internet-Systemtelefons 5 und dem Access-Punkt 7 einen anderen Funkstandard, z. B. den Hyper-LAN-Standard einzusetzen. Erfindungsgemäß kann für die Anbindung des tragbaren Internet-Systemtelefons 5 an das Netzwerk 1 somit auch ein bereits bestehendes Wireless LAN-Infrastruktur genutzt werden. Das tragbare Internet-Systemtelefon ergänzt sich somit in idealer Weise mit bereits vorhandenen WLAN-Datenendgeräte und WLAN-Mobiltelefonen.

Diese WLAN-Mobiltelefone weisen im Gegensatz zum erfindungsgemäßen Internet-Systemtelefon 5 jedoch nur einen sehr begrenzten Leistungsumfang und Bedienkomfort auf, da die Signalisierung mit dem Access-Punkt ausschließlich mit den Leistungsmerkmalen, die durch das H.323-Signalisierungsprotokoll zur Verfügung gestellt werden, möglich ist. Zusätzliche Leistungsmerkmale können bei WLAN-Mobiltelefonen nur unter erheblichen Software-Aufwand durch Protokollerweiterung realisiert werden. Mit dem erfindungsgemäßen tragbaren Internet-Systemtelefon kann im Gegensatz dazu der komplette Leistungsumfang der herkömmlichen leitungsorientierten Telefonie, wie sie aus dem ISDN-Bereich bekannt ist, zur Verfügung gestellt werden. Dies wird dadurch erreicht, dass mit dem erfindungsgemäßen tragbaren Internet-Systemtelefon die Leistungsmerkmale, die mit einem Telefonanlagenprotokoll, z. B. dem ISDN-Protokoll, ausgeführt werden, mit dem Internet-Sprachdaten-paketen zum Gesprächspartner getunnelt übertragen werden.

Die erfindungsgemäße Funkschnittstelle 6 des portablen Internet-Systemtelefons 5, die in Figur 2 im Blockschaltbild gezeigt ist, weist hierzu eine Sprachdigitalisierungseinheit 61, eine sog. Codec-Einheit auf, die mit der Sprach-Hardware des Telefons, dem Lautsprecher, dem Mikrofon oder dem Headset (Leitungen sind angedeutet) verbunden ist. Die Codec-Einheit 61 komprimiert und dekomprimiert die mit der Hardware ausgetauschten elektrischen Sprachsignale, wobei gleichzeitig eine ausreichende Sprachqualität garantiert wird.

An die Codec-Einheit 61 ist ein digitaler Signalprozessor 62 angeschlossen, der die von der Codec-Einheit 61 komprimierten Sprachsignale digitalisiert. Der digitale Signalprozessor 62 ist wiederum mit dem Schnittstellen-Hauptprozessor 63 verbunden, der die digitalisierten Datensignale gemäß dem auf dem Kommunikationsnetzwerk laufenden Internet-Protokoll in Datenpakete umsetzt. Die Datenpakete werden dabei zusätzlich mit einer Adressinformation versehen.

Der Hauptprozessor 63 ist weiterhin mit den Eingabe- und Ausgabeeinheiten des Telefons, dem Display, der Tastatur und dem Funktionsspeicher (Leitungen sind angedeutet) verbunden, um zusätzliche Leistungsmerkmale des Internet-Systemtelefons über die Datenpakete getunnelt mit zu übertragen. Diese Leistungsmerkmale werden hierzu vom Prozessor 63 in dafür vorgesehene Abschnitte der Datenpakete ein- und ausgeblendet. Hierdurch ist es möglich, z. B. die kompletten ISDN-Leistungsmerkmale bei der Internet-Telefonie, wie Weiterverbinden, Rufweiterleiten, Halten von Anrufen, Nachrichten übermitteln, Namen übermitteln, Rückruf etc. bei der Internet-Telefonie zu nutzen. Der Prozessor 63 steht weiter mit einer Funkeinheit in Verbindung, die eine Funkumsetzeinheit 64 aufweist, die die Datenpakete in das gewünschte Frequenzband z. B. das Standard-WLAN-Frequenz bei 2,4 GHz umsetzt, und dann an eine Sendeeinheit 65 weitergibt, die den Datenaustausch mit dem Access-Punkt 7 des Netzwerkes 1 über eine Antenne 66 ausführt.

Ein Telefongespräch im Rahmen der Internet-Telefonie mit dem erfindungsgemäßen Kommunikationsnetz wird so ausgeführt, dass der das erfindungsgemäße portable Internet-Systemtelefon 6 bedienende Gesprächsteilnehmern die gewünschte Telefonnummer des Gesprächsteilnehmers über die Tastatur eingibt und gegebenenfalls weitere Leistungsmerkmale für das Telefongespräch bestimmt. Gleichzeitig wird gemäß dem H.323-Signalisierungsprotokoll über den Internet-Komunikationsserver 2 dann eine entsprechende Gesprächsanmeldung durchgeführt und dem gewünschten Gesprächsteilnehmer signalisiert. Die beiden Gesprächsteilnehmer können anschließend miteinander sprechen.

Beim Internet-Systemtelefon wird die Sprache durch das Mikrofon in elektrische Sprachsignale umgewandelt, dann von der Codec-Einheit 61 komprimiert und dem digitalen Signalprozessor 62 in einen digitalen Datenstrom verwandelt. Dieser digitale Datenstrom wird dann vom Hauptprozessor 63 in InternetDatenpakete verpackt, wobei die gewünschten Telefonleistungsmerkmale in die Datenpakete an den dafür vorgesehenen Stellen eingeblendet werden. Die Datenpakete werden anschließend über die Funkumsetzeinheit 64 in das entsprechende Funkband übersetzt und vom Sender 65 über die Antenne 66 an den Access-Punkt 7 abgestrahlt. Die Funksignale werden im Access-Punkt 7 dann wieder in elektrische Datensignale verwandelt und mithilfe des Internet-Komunikationsservers 2 aber das Netzwerk 1 an den Internet-Telefonapparat des Gesprächsteilnehmers z. B. das Telefon 3 übermittelt. Hier werden die Datenpakete dann wieder zu einem digitalen Datenstrom zusammengefasst und in ein analoges Sprachsignal zurückverwandelt, um über den Telfonlautsprecher ausgegeben werden zu können.

Mit erfindungsgemäßen Internet-Telefonie-Auslegung ist es möglich, flexibel mit hoher Funktionalität und Bedienkomfort über das Internet zu telefonieren. Entscheidend ist hierbei, dass das erfindungsgemäße Internet-Systemtelefon portabel ausgelegt ist, wodurch es flexibel eingesetzt werden kann. Die Funkschnittstelle am Internet-Systemtelefon kann dabei auch als nachrüstbares Modul ausgebildet sein. Der Access-Punkt am Netzwerk sorgt für einen zuverlässigen Funkdatenaustausch. Durch Tunneln der Leistungsmerkmale bei der Sprachdatenübermittlung in Form der Internetdatenpakete wird darüber hinaus für einen hohen Bedienkomfort und einen großen Leistungsumfang gesorgt.

Bezugszeichenliste
- 1: Netzwerk
- 2: Internet-Kommunikationsserver
- 3: internetfähiges Telefon
- 4: Netzwerkkabel
- 5: Internet-Systemtelefon
- 6: Funkschnittstelle
- 7: Funk-Access-Punkt
- 51: Sprachdigitalisierungseinheit
- 61: Codec-Einheit
- 62: Signalprozessor
- 63: Schnittstellen-Hauptprozessor
- 64: Funkumsetzeinheit
- 65: Sender
- 66: Antenne

## Patentansprüche

1. Verfahren zum Betreiben eines Telefonie-Endgeräts (5) in einem Netzwerk (1), wobei das Telefonie-Endgerät eine Netzwerkschnittstelle (6) aufweist, die bidirektional Sprachsignale digitalisiert und auf der Grundlage des Intemet-Protokolls in Sprachpakete verpackt, das Netzwerk einen Funk-Access-Punkt (7) aufweist und die Netzwerkschnittstelle (6) des Telefonie-Endgeräts eine Funkschnittstelle ist,
**dadurch gekennzeichnet, dass**
das Telefonie-Endgerät (5) ein Systemtelefon mit Sonderfunktionen ist, die auf der Grundlage eines Telefonanlagen-Protokolls ausgeführt werden, wobei die Funkschnittstelle (6) des Telefonie-Endgeräts die Sonderfunktionen mit den Sprachdaten-Paketen zu einem Gesprächspartner getunnelt überträgt.

2. Verfahren nach Anspruch 1,
**dadurch gekennzeichnet, dass**
als Funkstandard der WLAN-Standard 802.11 eingesetzt wird.

3. Netzwerk (1) mit wenigstens einem ersten und einem zweiten Telefonie-Endgerät (3, 5), die jeweils eine Netzwerkschnittstelle (6) aufweisen, die bidirektional Sprachsignale digitalisiert und auf der Grundlage des Internet-Protokolls in Sprachpakete verpackt, das Netzwerk (1) einen Funk-Access-Punkt (7) aufweist und die Netzwerkschnittstelle (6) mindestens des ersten Telefonie-Endgeräts (5) eine Funkschnittstelle ist,
**dadurch gekennzeichnet, dass**
das erste Telefonie-Endgerät (5) ein Systemtelefon mit Sonderfunktionen ist, die auf der Grundlage eines Telefonanlagen-Protokolls ausgeführt werden, wobei die Funkschnittstelle (6) des ersten Telefonie-Endgeräts ausgelegt ist, die Sonderfunktionen mit den Sprachdaten-Paketen zu dem zweiten Telefonie-Endgerät (3) getunnelt zu übertragen.

4. Netzwerk nach Anspruch 3,
**dadurch gekennzeichnet, dass**
als Funkstandard der WLAN-Standard 802.11 eingesetzt wird.

5. Telefonie-Endgerät (5) zum Betrieb in einem Netzwerk (1) mit eine Netzwerkschnittstelle (6), die bidirektional Sprachsignale digitalisiert und auf der Grundlage des Internet-Protokolls in Sprachpakete verpackt, die Netzwerkschnittstelle (6) des Telefonie-Endgeräts (5) eine Funkschnittstelle ist, die für eine Funkübertragung der Sprachpakete zu einem Funk-Access-Punkt (7) im Netzwerk (1) ausgelegt ist,
**dadurch gekennzeichnet, dass**
das Telefonie-Endgerät (5) ein Systemtelefon mit Sonderfunktionen ist, die auf der Grundlage eines Telefonanlagen-Protokolls ausgeführt werden, wobei die Funkschnittstelle (6) des Telefonie-Endgeräts ausgelegt ist, die Sonderfunktionen mit den Sprachdaten-Paketen zu einem Gesprächspartner getunnelt zu übertragen.

6. Telefonie-Endgerät nach Anspruch 5,
**dadurch gekennzeichnet, dass**
die Funkschnittstelle (6) steckbar ausgelegt ist.

7. Telefonie-Endgerät nach Anspruch 5 oder 6,
**dadurch gekennzeichnet, dass**
die Sonderfunktionen ISDN-Leistungsmerkmale sind.

## Claims

1. Method for operating a telephone terminal (5) in a network (1), the telephone terminal having a network interface (6) which bidirectionally digitises speech signals and packages them into speech packets on the basis of the Internet protocol, the network having a radio access point (7) and the network interface (6) of the telephone terminal being a radio interface, **characterised in that** the telephone terminal (5) is a system telephone having special functions which are performed on the basis of a telephone system protocol, the radio interface (6) of the telephone terminal transmitting the special functions to a conversation partner in a tunnelled manner together with the speech data packets.

2. Method according to claim 1, **characterised in that** the WLAN standard 802.11 is used as a radio standard.

3. Network (1) comprising at least a first and a second telephone terminal (3, 5), which each have a network interface (6) which bidirectionally digitises speech signals and packages them into speech packets on the basis of the Internet protocol, the network (1) having a radio access point (7) and the network interface (6) at least of the first telephone terminal (5) being a radio interface, **characterised in that** the first telephone terminal (5) is a system telephone having special functions which are performed on the basis of a telephone system protocol, the radio interface (6) of the first telephone terminal being designed to transmit the special functions to the second telephone terminal (3) in a tunnelled manner together with the speech data packets.

4. Network according to claim 3, **characterised in that** the WLAN standard 802.11 is used as a radio standard.

5. Telephone terminal (5) for operation in a network (1) comprising a network interface (6) which bidirectionally digitises speech signals and packages them into speech packets on the basis of the Internet protocol, the network interface (6) of the telephone terminal (5) being a radio interface which is designed for radio transmission of the speech packets to a radio access point (7) in the network (1), **characterised in that** the telephone terminal (5) is a system telephone having special functions which are performed on the basis of a telephone system protocol, the radio interface (6) of the telephone terminal being designed to transmit the special functions to a conversation partner in a tunnelled manner together with the speech data packets.

6. Telephone terminal according to claim 5, **characterised in that** the radio interface (6) is designed in a pluggable manner.

7. Telephone terminal according to either claim 5 or 6, **characterised in that** the special functions are ISDN features.

## Revendications

1. Procédé de fonctionnement d'un terminal de téléphonie (5) dans un réseau (1), le terminal de téléphonie présentant une interface de réseau (6) qui numérise des signaux vocaux de façon bidirectionnelle et les regroupe en paquets vocaux sur la base du protocole Internet, le réseau présentant un point d'accès radio (7), et l'interface de réseau (6) du terminal de téléphonie étant une interface radio,
**caractérisé en ce que**
le terminal de téléphonie (5) est un téléphone système avec des fonctions spéciales qui sont réalisées sur la base d'un protocole d'installations téléphoniques, l'interface radio (6) du terminal de téléphonie transmettant à un correspondant, avec mise sous tunnel, les fonctions spéciales avec les paquets de données vocales.

2. Procédé selon la revendication 1,
**caractérisé en ce que**
le standard WLAN 802.11 est utilisé en tant que standard radio.

3. Réseau (1) avec au moins un premier et un deuxième terminal de téléphonie (3, 5) qui présentent chacun une interface de réseau (6) qui numérise des signaux vocaux de façon bidirectionnelle et les regroupe en paquets vocaux sur la base du protocole Internet, le réseau (1) présentant un point d'accès radio (7), et l'interface de réseau (6) d'au moins le premier terminal de téléphonie (5) étant une interface radio,
**caractérisé en ce que**
le premier terminal de téléphonie (5) est un téléphone système avec des fonctions spéciales qui sont réalisées sur la base d'un protocole d'installations téléphoniques, l'interface radio (6) du premier terminal de téléphonie étant conçue pour transmettre au deuxième terminal de téléphonie (3), avec mise sous tunnel, les fonctions spéciales avec les paquets de données vocales.

4. Réseau selon la revendication 3,
**caractérisé en ce que**
le standard WLAN 802.11 est utilisé en tant que standard radio.

5. Terminal de téléphonie (5) destiné à fonctionner dans un réseau (1) avec une interface de réseau (6) qui numérise des signaux vocaux de façon bidirectionnelle et les regroupe en paquets vocaux sur la base du protocole Internet, l'interface de réseau (6) du terminal de téléphonie (5) étant une interface radio qui est conçue pour une transmission radio des paquets vocaux à un point d'accès radio (7) dans le réseau (1),
**caractérisé en ce que**
le terminal de téléphonie (5) est un téléphone système avec des fonctions spéciales qui sont réalisées sur la base d'un protocole d'installations téléphoniques, l'interface radio (6) du terminal de téléphonie étant conçue pour transmettre à un correspondant, avec mise sous tunnel, les fonctions spéciales avec les paquets de données vocales.

6. Terminal de téléphonie selon la revendication 5,
**caractérisé en ce que**
l'interface de réseau (6) est conçue de façon à pouvoir être enfichée.

7. Terminal de téléphonie selon la revendication 5 ou 6,
**caractérisé en ce que**
les fonctions spéciales sont des fonctions RNIS.
